# EUROPEAN PATENT SPECIFICATION

(11) **EP 2 113 540 B1**
(45) Date of publication and mention of the grant of the patent: **24.04.2013**
(21) Application number: 08711462.5
(22) Date of filing: 18.02.2008
(51) Int. Cl.: C09D 11/00, B41J 2/01, B41M 5/00, B41M 5/50, B41M 5/52

(54) **WATER-BASED INK JET INK AND RECORDING METHOD**
TINTENSTRAHLTINTE AUF WASSERBASIS UND AUFZEICHNUNGSVERFAHREN
ENCRE POUR JET D'ENCRE À BASE AQUEUSE ET PROCÉDÉ D'ENREGISTREMENT

(30) Priority: 23.02.2007 JP 2007043538
(43) Date of publication of application: 04.11.2009
(73) Proprietor: Konica Minolta Holdings, Inc., Tokyo 100-0005 (JP)
(72) Inventor: OHYA, Hidenobu, Hino-shi Tokyo 191-8511 (JP); USHIKU, Masayuki, Hino-shi Tokyo 191-8511 (JP); KAWANAMI, Tomoe, Hino-shi Tokyo 191-8511 (JP)
(74) Representative: Henkel, Breuer & Partner
(86) International application number: PCT/JP2008/052638
(87) International publication number: WO 2008/102722

(56) References cited:
- EP-A1- 1 561 788
- EP-A1- 1 980 598
- JP-A- 09 143 407
- JP-A- 2007 297 586
- US-A1- 2008 028 980

## Description

### TECHNICAL FIELD

The present invention relates to a novel water-based ink-jet ink and a record method using the same novel water-based ink-jet ink.

### BACKGROUND ART

In recent years, there have been developed ink-jet inks for industrial use which can be printed directly on a non-absorptive recording medium such as a polyvinylchloride sheet. Examples of these ink-jet inks are cited as: a solvent ink in which an organic solvent is used as a vehicle of an ink; and a UV ink containing a polymerizable monomer as a primary component of an ink. A solvent ink is dried by evaporating its solvent to the air, as a result, a solvent ink has a problem of emitting a large amount of VOC (Volatile Organic Compound), which becomes a social problem in recent years. There are other concerns for a worker about an odor or an effect for the safety. Therefore, it is required to provide equipment for making sufficient ventilation.

A UV ink is made harden immediately after printing, therefore, an emission of VOC is close to zero, but many monomers to be used in the ink may have problem of skin sensitization. Moreover, there are requirement of incorporating an expensive UV light source into a printer, and it cannot be used for printers for every field. Furthermore, when a UV ink is printed on a glossy type sheet, a feeling of gloss will be spoiled remarkably.

In the above-described background, there has been developed an ink which can be printed also directly to a non-water absorptive recording medium, by using a water-based ink containing water as a major component which has been widely used in homes and has reduced effects on the environment.

There has been proposed a water-based ink containing a water miscible solvent selected from glycols and glycol ethers (for example, refer to Patent Document 1). Moreover, there has been proposed an ink containing a graft co-polymer binder which contains a hydrophobic backbone and a non-ionic and hydrophilic side-chain, wherein the graft co-polymer binder is soluble in a water-based vehicle and is not soluble in water.

However, there have been no disclosure of using a binder compound having a structure of an acid group. Moreover, it was revealed by the present inventors that the disclosed technologies were insufficient to obtain a good image quality on a non-water absorptive recording medium, and the durability of the obtained image was insufficient. In addition, the recovery property after a maintenance process was not fully satisfactory. Moreover, when it was applied to a substrate such as textile, bleeding in a textile was easily occurred and it was hard to obtain a print of high image quality.

Further, in order to print on an untreated vinyl sheet or on a substrate covered with a vinyl coating by using with a piezo printing system which is provided with at least one heating device, there has been proposed a specific process ink containing a liquid medium, a water insoluble colorant, a polymer binder, a humectant and other additive, the liquid medium being composed of water and a water miscible humectant, wherein the liquid medium contains at least 80 mass% of water, the humectant contains butyl diglycol and 1-methoxypropanol-2 and the ink has a pH value of 8.5 or more (for example, refer to Patent Document 2). In addition, an ink in which a binder is in a dissolved state in a liquid ink has been proposed.

However, a content of glycol ether (butyl diglycol) in the disclosed ink is at maximum about 13%. According to the investigation by the present inventors, the disclosed technologies were insufficient to obtain a good image on a non-water absorptive recording medium, and the ejection of the ink was unstable and a recovery property by a maintenance process was not satisfactory. When it was applied to a substrate such as textile, bleeding in a textile was easily occurred and it was hard to obtain a print of high image quality.

There has been proposed another ink which contains resin micro particles as a binder resin which are not dissolved in an ink (for example, refer to Patent Document 3). This type of ink has a relatively stable ejection property, but the obtained image quality on a non-water absorptive recording medium was insufficient, and a recovery property by a maintenance process was not satisfactory. When it was applied to a substrate such as textile, bleeding in a textile was easily occurred and it was hard to obtain a print of high image quality.

The following requirements are desired as an ink printable also to a non-water absorptive recording medium.
(1) can be printed on a non-water absorptive recording medium to yield a high quality image
(2) the image obtained has a high durability
(3) can stably eject the ink
(4) can print during a long period of time and can print also with easy recovery after a maintenance process

There have been developed methods for printing an image on a textile, called as an ink-jet textile printing, by making use of an advantage of an ink-jet recording method. An ink-jet textile printing is different from a conventional textile printing method. It does not need to make a printing plate, and it has an advantage to make easily an image with a high gradation.

When an ink-jet printing method is applied to make a print, the viscosity of the ink is required to be as low as in a range of a few mN/m from the requirement of ejection of the ink. And, the textile absorbs the printed ink so quickly that the fixing ability of the ink to the textile tends to be insufficient. As a result, it is of general practice to give a specific pretreatment to the textile prior to the printing to it. When the pretreatment is not conducted, the ink will bleed along with a fiber of the textile resulting in deterioration of an image quality to a large extent, or a fixing ability of the image will be insufficient. Especially when a pigment ink is used without pretreatment of the textile, the image on the print will be rubbed off.

However, a well-known common pretreatment to a textile is a method in which a textile is immersed in a treatment solution, and then the textile is dried by squeezing the textile. By comparing an easy-made ink-jet printing method, the common pretreatment method will require a complex process and require many working hours. It will reduce greatly an advantage of an ink-jet printing method. Therefore, it is required an ink which can be printed even on a textile without subjected to a pretreatment and can produce a print of high image quality, and can achieve a high fixing property even when a pigment ink is employed.
Patent Document 1: JP-A No. 2000-44858
Patent Document 2: JP-A No. 2005-113147
Patent Document 3: JP-A No. 2005-220352

### DISCLOSURE OF THE INVENTION

### PROBLEMS TO BE SOLVED BY THE INVENTION

An object of the present invention is to provide a water-based ink-jet ink having the following properties and also to prove a recording method using the same water-based ink-jet ink. The water-based ink-jet ink of the present invention can produce an image of high quality and high durability on a wide variety of medium having a different surface property and water absorptivity, from a non-water absorptive medium to a textile only by applying heat to the recording medium. The water-based ink-jet ink of the present invention can be ejected stably and can be printed for a long period of time, and it is easy to recover by a maintenance process.

### MEANS TO SOLVE THE PROBLEMS

The aforesaid object of the present invention can be achieved by the following constitutions.
(1) A water-based ink-jet ink comprising: a pigment; an ink-soluble resin contained in an amount of from 2 mass% to 10 mass%; a water-soluble solvent selected from a glycol ether and a 1,2-alkanediol and contained in an amount of from 20 mass% to less than 45 mass% ; and a surfactant of a silicon surfactant or a fluorochemical surfactant, wherein the ink-soluble resin contains a carboxyl group or a sulfo group as an acid group and has an acid value of from 80 to less than 300.
(3) The water-based ink-jet ink described in the aforesaid item (1), wherein a recording medium which is recorded by the ink is a textile.
(4) The water-based ink-jet ink described in the aforesaid item (1), wherein a recording medium which is recorded by the ink is non-water absorptive.
(5) The water-based ink-jet ink described in the aforesaid items (3) or (4), wherein a recording medium which is recorded by the ink is heated during recording.
(6) A method for recording an image comprising a step of ejecting the water-based ink-jet ink of the aforesaid item (1) on a recording medium.
(7) The method for recording an image described in the aforesaid item (6), wherein the recording medium is a textile.
(8) The method for recording an image described in the aforesaid item (7), wherein the recording medium is not subjected to a pretreatment for ink-jet printing before the water-based ink-jet ink is ejected.
(9) The method for recording an image described in the aforesaid items (7) or (8), wherein the recording medium is made of cotton, silk, wool or polyester.
(10) The method for recording an image described in the aforesaid item (6), wherein the recording medium is non-water absorptive.
(11) The method for recording an image described in the aforesaid item (10), wherein the non-water absorptive recording medium is one selected from the group consisting of a polymer sheet, a board, a glass, a tile, a rubber and a synthetic paper.
(12) The method for recording an image described in any one of the aforesaid items (6) to (11), wherein a recording medium recorded by the ink is heated during recording.
(13) The method for recording an image described in the aforesaid item (12), wherein the heating of the recording medium is done by using a contact heater at a side of the recording medium opposite a side on which of the ink is ejected.
(14) The method for recording an image described in the aforesaid items (12) or (13), wherein a temperature of a surface of the recording medium on which the ink is ejected is in the range of 40 °C to 60 °C.

### EFFECTS OF THE INVENTION

The present invention made it possible to provide a water-based ink-jet ink which can be applied on a wide variety of medium to form an image of high quality and high durability. Further, the water-based ink-jet ink of the present invention can be ejected stably and can be printed for a long period of time, and it is easy to recover by a maintenance process. The present invention also made it possible to provide a recording method using the same water-based ink-jet ink.

### PREFERRED EMBODIMENTS TO CARRY OUT THE INVENTION

The water-based ink-jet ink of the present invention (hereafter it is also called simply as an ink) is characterized in the followings. The ink contains at least: a pigment; an ink-soluble resin contained in an amount of from 2 mass% to 10 mass%; a solvent contained in an amount of from 20 mass% to less than 45 mass% and having a surface tension of from 25 mN/m to 40 mN/m; and a surfactant of a silicon surfactant or a fluorochemical surfactant, wherein at least one of the ink-soluble resins contains an acid group of a carboxyl group or a sulfo group; and has an acid value of from 80 to less than 300.

In the present invention, the solvent having a surface tension of from 25 mN/m to 40 mN/m is one selected from a glycol ether and a 1,2-alkanediol.

The constitutions of the present invention will be detailed in the followings.

### (Pigment)

The pigment used in the present invention is not specifically limited as long as it is stably dispersed in a water based medium. It may be selected from: a pigment dispersion dispersed in a polymer resin; an encapsulated pigment covered with a water-insoluble resin; and a self-dispersible pigment which is prepared by modifying the surface of the pigment so as to be self-dispersed without using a dispersing resin. In case that the storage stability of the ink is a primary consideration, an encapsulated pigment covered with a water-insoluble resin is preferably selected.

When a pigment dispersion dispersed in a polymer resin is used, the polymer resin may be selected form a water-soluble resin. Examples of preferably used water soluble resins are as follows: styrene - acrylic acid - acrylic acid alkyl ester copolymer; styrene - acrylic acid copolymer; styrene - maleic acid copolymer; styrene - maleic acid - acrylic acid alkyl ester copolymer; styrene - methacrylic acid copolymer; styrene - methacrylic acid - acrylic acid alkyl ester copolymer; styrene - maleic acid half ester copolymer; vinyl naphthalene - acrylic acid copolymer; and vinyl naphthalene - maleic acid copolymer.

For dispersion of the above pigments, a variety of devices may be used such as: a ball mill, a sand mill, an attritor, a roll mill, an agitator, a Henschel mixer, a colloidal mill, an ultrasonic homogenizer, a pearl mill, a wet type jet mill and a paint shaker.

In order to eliminate coarse particles in the pigment dispersion of the present invention, a centrifuge and a filter may be preferably used.

When an encapsulated pigment covered with a water-insoluble resin is used, the water-insoluble resin is a resin which is insoluble in water having a property of a weak acidity to a weak basicity. The water-insoluble resin is preferably a resin having a solubility of less than 2% in water having a pH value of 4 to 10.

Examples of such resin are cited as: an acrylic resin, a styrene - acrylic resin, an acrylonitrile - acrylic resin, a vinyl acetate resin, a vinyl acetate -acrylic resin, a vinyl acetate - vinyl chloride resin, a polyurethane resin, a silicon - acrylic resin, an acrylic silicon resin, a polyester resin, and an epoxy resin.

A resin made by copolymerization of a hydrophobic monomer and a hydrophilic monomer can be also used.

Examples of a hydrophobic monomer are cited as: an acrylic acid ester (for example, n-butyl acrylate, 2-ethyl hexyl acrylate and 2-hydroxyethyl acrylate); a methacrylic acid ester (for example, ethyl methacrylate, butyl methacrylate and glycidyl methacrylate); and styrene

Examples of a hydrophilic monomer are cited as: acrylic acid, methacrylic acid and acrylamide. The monomer having an acid group in the molecule such as acrylic acid is preferably used after neutralized with a base after being polymerized.

As a molecular weight of a resin, an average molecular weight of 3,000 to 500,000 can be used. An average molecular weight of 7,000 to 200,000 can be preferably used. The resin having Tg of from about -30 °C to 100 °C can be used. And preferably, the resin having Tg of from about -10 °C to 80 °C can be used.

Polymerization methods applicable for preparing the resin are a solution polymerization method and an emulsion polymerization method. The polymerization can be done separately from the pigment, and also the polymerization can be done by supplying a monomer into a dispersion of the pigment.

As a method to cover the pigment with a resin, a variety of conventionally known methods can be used. Preferable examples of the covering include: a phase inversion emulsification method; an acid precipitation method; a method in which the pigment is dispersed with the aid of a polymerizable surfactant and then a monomer is supplied to the dispersion, whereby covering of the pigment is done while polymerization is carried out. More preferable method is as follows: to dissolve a water-insoluble resin into an organic solvent such as methyl vinyl ketone; to neutralize partially or fully the acid groups in the resin; to add a pigment and ion-exchanged water then to disperse the mixture; to eliminate the organic solvent; and to add water when it is needed to adjust and to obtain the targeted product.

The mass ratio of the pigment to the resin may be selected as a ratio of "Pigment/Resin" in the range of between 100/40 and 100/150. In particular, from the viewpoints of image durability, ejection stability, and storage stability of the ink, the ratio from 100/60 to 100/110 is a preferable range.

The average particle size of the pigment covered with the water-insoluble resin is preferably about 80 to 150 nm by considering the storage stability of the ink and coloring property.

As a self-dispersible pigment, a surface treated pigment which is commercially available can be used. Examples of such pigments are: CABO-JET200, CABO-JET300 (manufactured by Cabot Corporation) and BONJET CW1 (manufactured by Orient Chemical Co. Ltd.)

Pigments which can be used in the present invention are selected from conventionally known organic and inorganic pigments. Examples of them are: an azo pigment (such as azo lake, an insoluble azo pigment, a condensed azo pigment, and a chelate azo pigment); a multiple condensed ring pigment (such as a phthalocyanine pigment, perylene and a perylene pigment, an anthraquinone pigment, a quinacridone pigment, a dioxanedine pigment, a thioindigo pigment, and an isoindolinone pigment); a dye lake (such as a basic dye lake, and acid dye lake); an organic pigment (such as a nitro pigment, a nitroso pigment, aniline black, and a daylight fluorescent pigment); and an inorganic pigment such as carbon black.

Specific examples of organic pigments are cited as below.

As a magenta or a red pigment, the followings are cited: C. I. Pigment Red 2, C. I. Pigment Red 3, C. I. Pigment Red 5, C. I. Pigment Red 6, C. I. Pigment Red 7, C. I. Pigment Red 15, C. I. Pigment Red 16, and C. I. Pigment Red 48:1, C. I. Pigment Red 53:1, C. I. Pigment Red 57:1, C. I. Pigment Red 122, C. I. Pigment Red 123, C. I. Pigment Red 139, C. I. Pigment Red 144, C. I. Pigment Red 149, C. I. Pigment Red 166, C. I. Pigment Red 177, C. I. Pigment Red 178 and C. I. Pigment Red 222.

As an orange or a yellow pigment, the followings are cited: C. I. Pigment Orange 31, C. I. Pigment Orange 43, C. I. Pigment Yellow 12, C. I. Pigment Yellow 13, C. I. Pigment Yellow 14, C. I. Pigment Yellow 15, C. I. Pigment Yellow 17, C. I. Pigment Yellow 74, C. I. Pigment Yellow 93, C. I. Pigment Yellow 94, C. I. Pigment Yellow 128 and C. I. Pigment Yellow 138.

As a green or a cyan pigment, the followings are cited: C. I. Pigment Blue 15, C. I. Pigment Blue 15:2, C. I. Pigment Blue 15:3, C. I. Pigment Blue 16, C. I. Pigment Blue 60 and C. I. Pigment Green 7.

### (Ink-Soluble Resin)

The ink of the present invention contains an ink-soluble resin in an amount of 2 mass% to 10 mass%. An ink-soluble resin is a resin which has a solubility of at least about 10 % in an ink vehicle.

An ink-soluble resin according to the present invention has a function of a binder resin for improving durability of an image. Therefore, the ink-soluble resin is preferably a resin stably dissolved in the ink, and it is preferable that the ink-soluble resin is provided with a water resisting property after the ink is dried on the recording medium.

As an example of such resin, there is designed and used a resin having a hydrophobic component and a hydrophilic component with an appropriate balance. For a hydrophilic component, it may be used either an ionic component or a non-ionic component, but preferably used is an ionic component, and more preferably used is an anionic component. In particular, it is preferable to use a resin having an anionic component which is provided with water solubility by being neutralized with a basic component capable of being evaporated. A specifically preferable ink-soluble resin contains a carboxyl group or a sulfo group as an acid group and has an acid value of from 80 to less than 300 in order to achieve the effects of the present invention. More preferable acid value is in the range of about 90 to 200.

An acid value is defined as an amount of potassium hydroxide measured in milligram required to neutralize an acidic component contained in one gram of a resin.

Examples of such resin are cited as: an acrylic resin, a styrene - acrylic resin, an acrylonitrile - acrylic resin, a vinyl acetate - acrylic resin, a polyurethane resin and a polyester resin

As a resin, a resin containing both a hydrophobic monomer and a hydrophilic monomer can be used.

Examples of a hydrophobic monomer are cited as: an acrylic acid ester (for example, n-butyl acrylate, 2-ethyl hexyl acrylate and 2-hydroxyethyl acrylate); a methacrylic acid ester (for example, ethyl methacrylate, butyl methacrylate and glycidyl methacrylate); and styrene.

Examples of a hydrophilic monomer are cited as: acrylic acid, methacrylic acid and acrylamide. The monomer having an acid group in the molecule such as acrylic acid is preferably used after neutralized with a base after being polymerized.

As a molecular weight of a resin, an average molecular weight of 3,000 to 300,000 can be used. And preferably, an average molecular weight of 7,000 to 200,000 can be used.

The resin having Tg of from about -30 °C to 100 °C can be used. And preferably, the resin having Tg of from about - 10 °C to 80 °C can be used.

As a polymerization method, a solution polymerization method is preferably used.

It is preferable that the acid group originated from an acidic monomer used for preparing the resin is partially or fully neutralized with a basic component. Examples of neutralizing bases are: a base containing an alkaline metal (for example, sodium hydroxide, potassium hydroxide; and an amine (for example, ammonia, alkanolamine and alkylamine can be used). In particular, it is preferable to neutralize with an amine having a boiling pint of less than 200 °C from the viewpoint of improving durability of an image.

An amount of the resin added in the ink is from 2% to 10% in order to obtain the effect of the present invention. More preferably, it is used by adding in the ink from 3% to 6%.

In the present invention, the reason why the ink-soluble resin is preferably contained as a solid content in an amount of 2% to 10% is supposed to be as follows.

Among the requirements of the ink for printing an image of high quality on a non-ink absorptive medium, for example, a polymer sheet such as a polyvinyl chloride, it is important that the ink has a sufficient wetting ability to the medium, and also the ink can avoid degradation of the image quality such as beading and color bleeding caused by the mixing of the ink. In order to satisfy these requirements, a most effective way is to realize rapid increase of the viscosity of the ink, i. e., rapid decrease of the fluidity of the ink after reaching to the medium by means of a binder resin. In particular, this way is very effective for the ink which produces an image by heating the medium as was achieved by the embodiment of the present invention.

Furthermore, in the above-mentioned way, it is important to incorporate an ink-soluble resin as a binder resin in an amount of 2 mass% to 10 mass% as a solid content. When the amount of the ink-soluble resin is less than 2 mass%, the extent of the increase of the viscosity of the ink will be limited and the effect of preventing the mixing of the ink will be insufficient to obtain an image of high quality. When the added amount of the ink-soluble resin is 10 mass% or more, storage stability and ejection stability of the ink will be decreased.

### (Solvent)

The ink of the present invention contains a solvent having a surface tension of from 25 mN/m to 40 mN/m in an amount of from 20 mass% to less than 45 mass%. When the surface tension is less than 25 mN/m, storage stability and ejection stability of the ink will be decreased. On the other hand, when the surface tension is larger than 40 mN/m, it will occur mixing of the ink and the quality of the image will be decreased and durability of the image will be insufficient. More preferably, the ink of the present invention contains a solvent having a surface tension of from 25 mN/m to 35 mN/m in an amount of from 20 mass% to less than 45 mass%. The solvent having a surface tension of from 25 mN/m to 40 mN/m used in the present invention is: a water soluble organic solvent selected from a glycol ether and 1,2-alkanediol. The amount of the water soluble organic solvent is from 20 mass% to less than 45 mass%.

A preferable amount of that is from 25 mass% to less than 40 mass%. The aforesaid solvent may be contained singly in an amount of from 20 mass% to less than 45 mass%. It may be possible to use a plurality of solvents in a total amount of from 20 mass% to less than 45 mass%.

The measuring methods of a surface tension are disclosed in generally known references of surface chemistry and colloid chemistry. An example of which can be referred to Shin Jikken Kagaku Koza (New Experimental Chemistry Course) vol. 18 (Surface and Colloid), pp. 68 - 117 (Edited by Japan Chemical Society, published by Maruzen Co. Ltd.) In particular, Ring method (Du Nouy method) and Vertical plate method (Wilhelmy method) can be applied for measurement. Specifically in the present invention, a surface tensiometer CBVP Type A-3 Model (Kyowa Kagaku Corporation) was applied to measure the values.

Examples of a glycol ether are as follows: ethylene glycol monoethyl ether (28.2), ethylene glycol monobutyl ether (27.4), diethylene glycol monoethyl ether (31.8), diethylene glycol monobutyl ether (33.6), triethylene glycol mono-butyl ether (32.1), propylene glycol monopropyl ether (25.9), dipropylene glycol monomethyl ether (28.8), tripropylene glycol monomethyl ether (30.0).

Examples of an 1,2-alkanediol are as follows: 1,2-butanediol, 1,2-pentanediol, 1,2-hexanediol (28.1), 1,2-heptanediol. In addition, the numerical value in parenthesis expresses surface tension.

In the present invention, the reasons why a water soluble organic solvent selected from a glycol ether and a 1,2-alkanediol is contained in an amount of 20% to less than 45% is supposed to be as follows.

The first reason is that, as has been already described, this range will be specifically effective to promote increase of the viscosity of the ink and this will result in achieving an image of high quality.

The second reason is that this range will improve durability of the image. This effect will be supposed to be caused by the followings. Both glycol ether and 1,2-alkanediol are relatively hydrophobic among the group of water-miscible solvents. During the drying process of the ink of the present invention which contains the pigment covered with a water insoluble resin, these solvents will soften or partially dissolve the resin which covers the pigment. This will intensify close adhesion between the pigments or between the pigment and the ink-soluble resin, which will improve durability of the image.

Moreover, glycol ether and 1,2-alkanediol tend to soften a medium such as polyvinyl chloride. This will also give an effect to improve durability of the image. In particular, the improving effect is remarkable for the ink of the present invention which is used on a heated medium.

In addition, by incorporating a water-soluble organic solvent selected from a glycol ether and a 1,2-alkanediol in an amount of 20% or more, the ink will acquire a relatively high moisture-retaining property. The ink containing a pigment added with a binder resin will not be easily solidified by being dried. As a result, it will produce an advantage that an easy maintenance process such as ink spitting will be sufficient to recover a steady state for printing.

However, the addition of a water-soluble organic solvent in an amount of 45% or more will impair the dispersion stability of the pigment, and it will increase the initial viscosity of the ink, which will result in unstable ink ejection.

In the ink of the present invention may be added other water-soluble organic solvent than a glycol ether and a 1,2-alkanediol.

Examples of other water-soluble organic solvent preferably used are as follows: an alcohol (for example, methanol, ethanol, propanol, isopropanol, butanol, isobutanol, sec-butanol and t-butanol); a polyhydric alcohol (for example, ethylene glycol, diethylene glycol, triethylene glycol, polyethylene glycol, propylene glycol, dipropyrene glycol, polypropylene glycol, butylene glycol, hexanediol, pentanediol, glycerol, hexanetriol and thiodiglycol); an amine (for example, ethanolamine, diethanolamine, triethanolamine, N-methyldiethanolamine, N-ethyldiethanolamine, morpholine, N-ethyl morpholine, ethylenediamine, diethylenediamine, triethylentetramine, tetraethylene pentaamine, polyethyleneimine, pentamethyldiethylentriamine and tetramethylpropylenediamine); an amide (for example, formamide, N,N-dimethylformamide and N,N-dimethylacetamide); a heterocycle (for example, 2-pyrrolidone, N-methyl-2-pyrrolidone, cyclohexyl pyrrolidone, 2-oxazolidone and 1, 3-dimetnyl-2-imidazilidinine); and a sulfoxide (for example, dimethyl sulfoxide).

### (Surfactant)

In the present invention, a surfactant selected from one of a silicon surfactant and a fluorochemical surfactant is used. In order to obtain a sufficient wetting ability of the ink to a medium such as a polyvinyl sheet, one of the way is to incorporate one of a glycol ether and a 1,2-alkanediol in the ink in a large amount of such as 50% or more. However, the obtained image quality will be insufficient, and it will be hard to achieve high storage stability and high ejection stability of the ink. Therefore, it is preferable to obtain an enough wetting ability to a variety of recording medium by a combined use of a water soluble solvent (one of a glycol ether and a 1,2-alkanediol) and a surfactant (one of a silicon surfactant and a fluorochemical surfactant) as are used in the present invention.

In particular, the above-described combined use is effective to achieve an image of high quality on a variety of textiles which are not subjected to a pretreatment. In order to decrease a mixing of the inks on textiles which are not subjected to a pretreatment, it is required to decrease a diffusion of the ink along a thread of a textile. To achieve this purpose, it is important to decrease the fluidity of the ink by rapidly increasing the viscosity of the ink after the ink being arrived at the surface of the recording medium, which is considered to be one of the mechanisms of the present invention.

In the case of printing to a textile, the printed ink will be concentrated by penetration into minute porous spaces contained in threads and the viscosity of the ink will be increased. This penetration of the ink will be greatly improved by a combined use of a surfactant selected from one of a silicon surfactant and a fluorochemical surfactant with a water soluble solvent selected from one of a glycol ether and a 1,2-alkanediol contained in an amount of from 20% to less then 45%.

Example of a silicon surfactant preferably used are polyether modified polysiloxane compounds such as KF-351A and KF-642 (manufactured by Shin-Etsu Chemical Co. Ltd.); and BYK347 and BYK348 (manufactured by BYK Chemie Co. Ltd.).

A fluorochemical surfactant is a compound having a structure in which hydrogen atoms attached to hydrophobic carbons of a conventional surfactant are substituted partially or fully with a fluorine atom. Among the known fluorochemical surfactants, preferable ones are compounds having a perfluoroalkyl group.

Several fluorochemical surfactants are available in the market as: Megafac F (manufactured by DIC Corporation); Surflon (manufactured by Asahi Glass Company); Fluorad FC (manufactured by Minnesota Mining and Manufacturing Companny); Monflor (manufactured by Imperial Chemical Industry Co. Ltd); Zonyls(E. I. du Pont de Nemours and Company); and Licowet VPF (Farbwerke Henkel Co. Ltd.).

Examples of a non-ionic fluorochemical surfactant are cited as: Magafac 144D (manufactured by DIC Corporation); Surflon S-141 and S-145 (manufactured by Asahi Glass Company). Examples of a zwitterionic fluorochemical surfactant are cited as: Surflon S-131 and S-132 (manufactured by Asahi Glass Company).

### (Recording Media)

The ink of the present invention is appropriately used to print on a non-absorptive medium such as a polyvinyl chloride sheet and also on a low absorptive or an absorptive medium such as a plain paper, a coated paper, an ink-jet paper and a textile.

Examples of a non-absorptive medium are cited as: a polymer sheet, a board (soft polyvinyl chloride, hard polyvinyl chloride, an acrylic board and a polyolefin board), a glass, a tile, a rubber and a synthetic paper.

Examples of a low absorptive or an absorptive medium are cited as: a variety of textiles (for example, cotton, silk, wool and polyester); a plain paper (for example, a copy paper and a plain paper for process printing); a coated paper, an art paper, an ink-jet paper, an ink-jet glossy paper, a cardboard and wood). Specifically textiles are effective for printing.

The ink of the present invention is specifically preferable to use for a textile. Conventionally, a textile used for ink-jet printing is subjected to a pretreatment to apply a glue composition or a cationic material to it. On the other hand, the ink of the present invention can be appropriately used to an untreated textile. It can be used to a textile having subjected to a pretreatment process, however, the ink of the present invention is particularly preferable to print on a textile which has not been subjected to a pretreatment process.

Examples of a textile are various fibers such as cotton, silk, wool, nylon, polyester, acetate, rayon, polypropylene, vinylon, and acrylic fiber. It is also possible to use a mixed thread of these fibers, a mixed woven textile of these fibers and a non-woven fabric. Moreover, as a thickness of the thread which constitutes the above-described textile is preferably in the range of 10 to 100d.

### (Heating during Printing)

In the present invention, a recording medium is heated during printing is done.

It is possible to highly enhance the increase rate of viscosity of the ink by heating the recording medium. This will result in producing an image of high quality and, at the same time, durability of the image will be improved.

Heat is preferably applied to such extent that the surface temperature of the recording medium becomes to be in the range of 40 °C to 80 °C. When it is less than 40 °C, the image quality will be insufficient, and it will need too much time to dry the ink. When it is larger than 80 °C, the ejection of the ink will be affected and printing cannot be done stably. A more preferable temperature range of the surface of the recording medium is from 40 °C to 60 °C.

A specifically preferable heating method is to incorporate a heater in a medium transportation portion or in a platen member, and to heat the recording medium from below the recording medium while the heater is contacted with the back of the recording medium. The heating method by using a heater such as a lamp can be selected, in which the heater is arranged in a position of above or under the recording medium without contacting the recording medium.

### EXAMPLES

The examples of the present invention will be shown below, however, the present invention is not limited to them.

### (Preparation of Pigment Dispersion)

### <Synthesis of Dispersion Resin D-1>

Into a flask equipped with a dripping funnel, a nitrogen gas inlet, a reflux condenser, a thermometer and a stirrer was added 50 g of methyl ethyl ketone, then the mixture was heated to 75 °C while bubbling with a nitrogen gas. To there was added a mixture of monomers each having an amount shown in Table 1, 50 g of methyl ethyl ketone and 500 mg of AIBN (initiator) using a dropping funnel for three hours. After completing the dropping, the mixture was heated to reflux for another six hours. After the mixture was cooled, the amount of methyl ethyl ketone which was evaporated was replenished and the resin solution having a solid content of 50 mass% was obtained.

**Table 1**

| | D-1 |
|---|---|
| N-butyl methacrylate | 70 |
| Butyl acrylate | 5 |
| 2-Hydroxyethyl methacrylate | 5 |
| Benzyl methacrylate | - |
| Acrylonitrile | - |
| Styrene | - |
| Acrylic acid | 20 |
| 2-Acrylamide-2-methylpropanesufonic acid | - |
| Mw | 10000 |
| Acid Value | 155 |

### <Preparation of Pigment Dispersion P-1>

To 100 g of thus synthesized Dispersion Resin D-1 in 50% of methyl ethyl ketone solution was added a 20% aqueous hydroxide solution in a sufficient amount to neutralize 100% of the salt forming groups. To that mixture was added while stirring 100 g of C. I. Pigment Blue 15:3 little by little, then the mixture was kneaded using with a bead mill for two hours. To the obtained kneaded composition was added 400 g of ion exchanged water and stirred. Then methyl ethyl ketone was eliminated under a reduced pressure with heating. Further, ion exchanged water was added to it and Pigment Dispersion P-1 having a solid content of 15% was obtained.

Pigment Dispersions P-2 to P-4 each were prepared in the same manner as preparing Pigment Dispersion P-1 except that C. I. Pigment Blue 15:3 was replaced with respectively, C. I. Pigment Yellow 74, C. I. Pigment Red 122 and Carbon Black. In Table 2, C, Y, M, Bk each respectively represents C. I. Pigment Blue, C. I. Pigment Yellow 74, C. I. Pigment Red 122 and Carbon Black.

Particle size measurement of the pigment dispersions can be done with commercially available particle size measuring apparatuses using a light scattering method, an electrophoresis, or a laser Doppler method. It is possible to measure a particle size from pictures of at least 100 particles taken with transmission electron microscopy and statistically analyzing the pictures using image analyzing software such as Image-Pro (manufactured by Media Cybernetics Corporation).

**Table 2**

| Pigment Dispersion | P-1 | P-2 | P-3 | P-4 |
|---|---|---|---|---|
| Pigment | C | Y | M | Bk |
| | 100 | 100 | 100 | 100 |
| Dispersion Resin | D-1 | D-1 | D-1 | D-1 |
| | 50 | 60 | 60 | 50 |
| Average Particle Size (nm) | 130 | 135 | 140 | 120 |

### (Synthesis of Ink-soluble Resin)

### <Synthesis of Ink-soluble Resin R-1>

Into a flask equipped with a dripping funnel, a nitrogen gas inlet, a reflux condenser, a thermometer and a stirrer was added 50 g of methyl ethyl ketone then heated to 75 °C while bubbling with a nitrogen gas. To there was added a mixture of monomers each having an amount shown in Table 3, 50 g of methyl ethyl ketone and 500 mg of AIBN (initiator) using a dropping funnel for three hours. After completing the dropping, the mixture was heated to reflux for another six hours. Then methyl ethyl ketone was eliminated under a reduced pressure with heating. The residue was dissolved in a mixed solution prepared with 450 ml of ion exchanged water and dimethylaminoethanol having an amount corresponding to 1.05 times of moles of acrylic acid which was added as a monomer. Then by further adjusting an amount of ion exchanged water, an aqueous resin solution having a solid content of 20% was obtained.

By the similar method, Ink-soluble Resins R-2 to R-7 were synthesized.

**Table 3**

| | R-1 | R-2 | R-3 | R-4 | R-5 | R-6 | R-7 |
|---|---|---|---|---|---|---|---|
| N-butyl methacrylate | 80 | - | 40 | 60 | 50 | 30 | 70 |
| Butyl acrylate | 5 | 40 | - | - | - | 20 | - |
| 2-Hydroxyethyl methacrylate | - | 5 | | 20 | 5 | 10 | 18 |
| Benzyl methacrylate | - | - | - | - | 5 | - | - |
| Acrylonitrile | - | - | - | - | - | 20 | - |
| Styrene | - | 30 | 40 | - | - | - | - |
| Acrylic acid | 15 | 25 | 20 | 20 | 40 | 10 | 12 |
| 2-Acrylamide-2-methylpropanesufonic acid | - | - | - | - | - | 10 | - |
| Mw | 7000 | 7000 | 10000 | 8000 | 8000 | 9000 | 10000 |
| Acid Value | 117 | 194 | 155 | 155 | 311 | 106 | 85 |

### (Preparation of Ink)

As are shown in Tables 4, 5 and 6, Inks were prepared and then filtered using a filter of 5 µm. Pigment Dispersion, Resin to be added, Solvent and Surfactant each shown in Tables 4, 5 and 6 were added as indicated in the figures of mass% in Tables 4, 5 and 6, then ion exchanged water was added so as to make a total amount to be 100 mass%.

In Table 6, JONCRYL 60J has a Mw of 8,500 and an acid value of 215; and JONCRYL 70J has a Mw of 1,650 and an acid value of 240.

In Tables 4, 5 and 6, DEGBE, TEGBE, 1,2-HD each respectively represent, diethylene glycol monobutyl ether, triethylene glycol monobutyl ether, and 1,2-hexanediol. Surfactants Si, F and Comparison each respectively represent KF-351A (manufactured by Shin-Etsu Chemical Co. Ltd.), Megafac 144D (manufactured by DIC Corporation) and Surfinol 465. Surfactant Si-2 represents BYK 347 manufactured by BYK Chemie Japan Co. Ltd.

### (Evaluation 1)

The prepared Inks were subjected to the following evaluation test. The evaluation results are also shown in Tables 4, 5 and 6.

A printer provided with four piezo type ink-jet heads having 720 dpi (dots per inch) and a dot volume of 16 p1 arranged in parallel was employed for evaluation. This printer can arbitrarily heat the recording medium using with a contact heater applied below the recording medium. This printer is provided with both a position of blank ejection of an ink and a maintenance unit of a blade wipe type in an ink-jet head housing position. Head cleaning can be made with an arbitrarily frequency by using these facilities.

### (Evaluation of Image Quality)

Each of the prepared Inks was loaded in one of the above-described ink-jet heads for evaluation. A monochrome image of each of the prepared Inks was produced, and evaluation of image quality was performed. The evaluation conditions are as follows.
Printing resolution: 720 dpi x 720 dpi
Head carrying speed: 200 mm/sec (bi-directional printing)
Medium: Polyvinyl chloride sheet (Digitalvinyl, manufactured by Metalmark Co. Ltd.); Textiles (Polyestertropical; a polyester textile which has not been subjected to pretreatment)
Heating temperature of medium: Surface temperature to be printed, 50 °C
Image for evaluation: Wedge image, Character and Outline character
Environment for evaluation: 20 °C, Relative humidity 55%

The appearance of repelling of an image, the appearance of beading caused by mixture of the ink and drawing capacity for a small size character were evaluated by the followings.
1: Local repelling is found, beading is intense and a small size character cannot be drawn
2: No repelling is found, but beading is intense and a small size character cannot be drawn
3: No repelling is found, but beading is slightly found and a small size character can be drawn with unclear shape
4: No repelling is found, no beading is found and a small size character can be drawn, but an outline character drawing is not fully clearly made
5: No repelling is found, no beading is found, a small size character can be drawn and an outline character drawing is clearly made
(Image Durability 1: Image formed on Polyvinyl Chloride)
1: Image is fallen away by wiping with a dry cloth (Bencot, manufactured by Asahi Chemical Industry Co. Ltd.)
2: Image is not fallen away by wiping with a dry cloth, but is fallen away by wiping with a cloth soaked in water
3: Image is not fallen away by wiping with a dry clot and with a cloth soaked in water, but image is fallen away by wiping with a cloth soaked in a mixed liquid of water and alcohol
4: Image is not fallen away by wiping with a dry cloth and with a cloth soaked in water, but image is fallen away slightly by wiping with a cloth soaked in a mixed liquid of water and alcohol
5: Image is not fallen away by wiping with a dry cloth, with a cloth soaked in water, and with a cloth soaked in a mixed liquid of water and alcohol
(Image Durability 2: Image formed on Textile)
1: The printed image is distorted by wiping with a dry textile (the same textile used for printing)
2: No visible distortion of image is found by wiping with a dry textile, but a dry textile used for wiping the image is tinted with color
3: Almost no color is observed on a dry textile used for wiping the image, but the image is distorted by wiping with a textile soaked in water
4: No visible distortion of image is found by wiping with a textile soaked in water, but the textile soaked in water textile used for wiping the image is tinted with color
5: Almost no color is observed on a textile soaked in water used for wiping the image

### (Ejection Stability)

Thirty sheets of the above-described evaluation images having an A4 size were produced continuously, then after an interval of 60 minutes, another sheet of evaluation image was produced for evaluation. When the evaluation image was made after an interval of 60 minutes, a blank ejection of an ink was carried out from all the nozzles.
1: A large number of defects in the image (failures of ink ejection) are found
2: A limited number of defects in the image are found
3: Almost no defects in the image are found, but a small size character drawing is deteriorated, when it is observed by expansion, satellites are found in dots
4: No defects in the image are found, but a light brush-stroke is found in the beginning portion of the image drawing (for a distance of a several millimeters)
5: No defects in the image are found including in the beginning portion of the image drawing

### (Continuous Printing Property)

One hundred sheets of the above-described evaluation images having an A4 size were produced continuously. After finished each ten sheets of evaluation images, a blank ejection of an ink was carried out from all the nozzles, then printing was made.
1: Failure is found until printing 10 sheets of prints, and printing is stopped
2: Failure is found during printing of from 20 to 50 sheets of prints, and printing is stopped
3: Can be obtained a print having an initial printing quality until 50 sheets of prints, but a small size character drawing is slightly deteriorated in a print thereafter
4: Can be obtained a print having an initial printing quality until 70 sheets of prints, but a small size character drawing is slightly deteriorated in a print thereafter
5: Can be obtained a print having an initial printing quality until 100 sheets of prints

### (Recovery Property by Maintenance)

After printing 10 sheets of the above-described evaluation images having an A4 size, an interval of one day was taken. Then, a cleaning procedure composed of blank ejection of ink and wiping was conducted for cleaning of nozzles. Thereafter, another 50 sheets of the above-described evaluation images were continuously produced. During these another 50 sheets of the above-described evaluation images were produced, a blank ejection of an ink was carried out from all of the nozzles after production of each ten sheets of evaluation images.
1: No recovery is made, and many failures in image are found
2: Recovery is insufficient, and some failures in image are found
3: Recovery is made, but a small size character drawing is slightly deteriorated in prints after 10 sheets
4: Recovery is made, but a small size character drawing is slightly deteriorated in prints after 30 sheets
5: Recovery is made, continuously printing of 50 sheets of images is possible

**Table 4**

| Ink | | C-1 | C-2 | C-3 | C-4 | C-5 | C-6 | C-7 | C-8 | C-9 | C-10 | C-11 | C-12 |
|---|---|---|---|---|---|---|---|---|---|---|---|---|---|
| Pigment Dispersion | | P-1 | P-1 | P-1 | P-1 | P-1 | P-1 | P-1 | P-1 | P-1 | P-1 | P-1 | P-1 |
| | | 7 | 7 | 7 | 7 | 7 | 7 | 7 | 7 | 7 | 7 | 7 | 7 |
| Ink-soluble Resin | | R-1 | R-1 | R-1 | R-2 | R-2 | R-1 | R-1 | R-1 | R-1 | R-2 | R-3 | R-4 |
| | | 3 | 3 | 3 | 3 | 3 | 2.1 | 6 | 8 | 9.5 | 3 | 3 | 3 |
| Solvent | | DEGBE | DEGBE | DEGBE | DEGBE | DEGBE | DEGBE | DEGBE | DEGBE | DEGBE | DEGBE | DEGBE | DEGBE |
| | | 21 | 27 | 30 | 35 | 44 | 21 | 21 | 21 | 21 | 27 | 27 | 27 |
| | | - | - | - | - | - | - | - | - | - | - | - | - |
| | | - | - | - | - | - | - | - | - | - | - | - | - |
| | | - | - | - | - | - | - | - | - | - | - | - | - |
| | | | | | | | | | | | | | |
| Surfactant | | Si | Si | Si | Si | Si | Si | Si | Si | Si | Si | Si | Si |
| | | 0.3 | 0.3 | 0.3 | 0.3 | 0.3 | 0.3 | 0.3 | 0.3 | 0.3 | 0.3 | 0.3 | 0.3 |
| Ion exchanged water | | *2 | *2 | *2 | *2 | *2 | *2 | *2 | *2 | *2 | *2 | *2 | *2 |
| Image Quality Evaluation | *1 | 4 | 5 | 4 | 4 | 3 | 3 | 4 | 4 | 3 | 5 | 5 | 5 |
| | Textile | 3 | 5 | 5 | 3 | 4 | 3 | 4 | 4 | 3 | 5 | 5 | 5 |
| Image Durability | *1 | 4 | 5 | 5 | 5 | 4 | 3 | 4 | 5 | 3 | 5 | 5 | 5 |
| | Textile | 4 | 5 | 5 | 5 | 4 | 3 | 5 | 4 | 3 | 5 | 5 | 5 |
| Ejection Stability | | 4 | 5 | 5 | 4 | 3 | 4 | 4 | 3 | 3 | 5 | 5 | 5 |
| Continuous Printing Property | | 4 | 5 | 5 | 4 | 3 | 4 | 4 | 3 | 3 | 5 | 5 | 5 |
| Recovery Property by Maintenance | | 4 | 5 | 5 | 4 | 3 | 4 | 4 | 3 | 3 | 5 | 5 | 5 |
| Remarks | | Inv. | Inv. | Inv. | Inv. | Inv. | Inv. | Inv. | Inv. | Inv. | Inv. | Inv. | Inv. |

| | | | | | | | | | | | | | |
|---|---|---|---|---|---|---|---|---|---|---|---|---|---|
| *1 : Polyvinyl chloride sheet *2 : Residual amount Inv.: Present Invention | | | | | | | | | | | | | |

**Table 5**

| Ink | | C-13 | C-14 | C-15 | C-16 | C-17 | C-18 | C-19 | C-20 | C-21 | C-22 | C-23 | C-24 |
|---|---|---|---|---|---|---|---|---|---|---|---|---|---|
| Pigment Dispersion | | P-1 | P-1 | P-1 | P-1 | P-1 | P-1 | P-1 | P-1 | P-1 | P-1 | P-1 | P-1 |
| | | 7 | 7 | 7 | 7 | 7 | 7 | 7 | 7 | 7 | 7 | 7 | 7 |
| Ink-soluble Resin | | R-1 | R-1 | R-1 | R-1 | R-1 | R-1 | R-1 | R-2 | R-1 | R-1 | R-5 | R-6 |
| | | 3 | 3 | 3 | 3 | 3 | 3 | 3 | 3 | 1.5 | 11 | 3 | 3 |
| Solvent | | DEGBE | TEGBE | TEGBE | TEGBE | TEGBE | DEGBE | DEGBE | DEGBE | DEGBE | DEGBE | DEGBE | DEGBE |
| | | 27 | 12 | 16 | 10 | 5 | 27 | 18 | 47 | 21 | 21 | 27 | 27 |
| | | - | 1,2-HD | 1,2-HD | 1, 2-HD | 1,2-HD | - | - | - | - | - | - | - |
| | | - | 10 | 10 | 5 | 5 | - | - | - | - | - | - | - |
| | | - | - | - | DEGBE | DEGBE | - | - | - | - | - | - | - |
| | | - | - | - | 7 | 14 | - | - | - | - | - | - | - |
| Surfactant | | F | Si | Si | Si | Si | Comp. | Si | Si | Si | Si | Si | Si |
| | | 0.3 | 0.3 | 0.3 | 0.3 | 0.3 | 0.5 | 0.3 | 0.3 | 0.3 | 0.3 | 0.3 | 0.3 |
| Ion exchanged water | | *2 | *2 | *2 | *2 | *2 | *2 | *2 | *2 | *2 | *2 | *2 | *2 |
| Image Quality Evaluation | *1 | 4 | 5 | 5 | 5 | 5 | 1 | 2 | 2 | 2 | 2 | 2 | 2 |
| | Textile | 4 | 5 | 5 | 5 | 5 | 1 | 1 | 3 | 1 | 2 | 2 | 2 |
| Image Durability | *1 | 5 | 5 | 5 | 5 | 5 | 3 | 3 | 3 | 2 | 2 | 2 | 2 |
| | Textile | 5 | 5 | 5 | 5 | 5 | 3 | 3 | 4 | 2 | 2 | 2 | 2 |
| Ejection Stability | | 5 | 5 | 5 | 5 | 5 | 3 | 2 | 2 | 3 | 1 | 2 | 2 |
| Continuous Printing Property | | 5 | 5 | 5 | 5 | 5 | 2 | 2 | 2 | 3 | 1 | 2 | 2 |
| Recovery Property by Maintenance | | 4 | 5 | 5 | 5 | 5 | 2 | 2 | 2 | 3 | 1 | 2 | 2 |
| Remarks | | Inv. | Inv. | Inv. | Inv. | Inv. | Comp. | Comp. | Comp. | Comp. | Comp. | Comp. | Comp. |

| | | | | | | | | | | | | | |
|---|---|---|---|---|---|---|---|---|---|---|---|---|---|
| *1 : Polyvinyl chloride sheet *2 : Residual amount Inv.: Present Invention Comp.: Comparatives Example | | | | | | | | | | | | | |

**Table 6**

| Ink | | C-25 | C-26 | C-27 | C-28 | C-29 |
|---|---|---|---|---|---|---|
| Pigment Dispersion | | P-1 | P-1 | P-1 | P-1 | P-1 |
| | | 7 | 7 | 7 | 7 | 7 |
| Ink-soluble Resin | | R-1 | R-7 | JONCRYL 60J | JONCRYL 70J | R-1 |
| | | 3 | 3 | 3 | 3 | 5 |
| Solvent | | 1,2-HD | TEGBE | TEGBE | TEGBE | TEGBE |
| | | 21 | 5 | 5 | 5 | 5 |
| | | - | 1,2-HD | 1,2-HD | 1,2-HD | 1,2-HD |
| | | - | 5 | 5 | 5 | 5 |
| | | - | DEGBE | DEGBE | DEGBE | DEGBE |
| | | - | 14 | 14 | 14 | 14 |
| Surfactant | | Si | Si | Si | Si | Si-2 |
| | | 0.3 | 0.3 | 0.3 | 0.3 | 0.5 |
| Ion exchanged water | | *2 | *2 | *2 | *2 | *2 |
| Image Quality Evaluation | *1 | 4 | 5 | 5 | 5 | 5 |
| | Textile | 3 | 5 | 5 | 5 | 5 |
| Image Durability | *1 | 4 | 5 | 5 | 5 | 5 |
| | Textile | 4 | 5 | 5 | 5 | 5 |
| Ejection Stability | | 4 | 5 | 5 | 5 | 5 |
| Continuous Printing Property | | 4 | 5 | 5 | 5 | 5 |
| Recovery Property by Maintenance | | 4 | 5 | 5 | 5 | 5 |
| Remarks | | Inv. | Inv. | Inv. | Inv. | Inv. |

| | | | | | | |
|---|---|---|---|---|---|---|
| *1 : Polyvinyl chloride sheet *2 : Residual amount Inv.: Present Invention | | | | | | |

From the results shown in Tables 4, 5 and 6, the inks of the present invention are found to be superior to the comparative inks in the above-described evaluations.

In addition, evaluation of image quality and image durability were made using Ink C-16 listed in Table 5. When Double Pike (polyester) was used, heat was not applied to it.

**Table 7**

| Ink | C-16 | C-16 | C-16 | C-16 | C-16 | C-16 |
|---|---|---|---|---|---|---|
| Textile | Ponzi (polyester) | Satin (polyester) | Double Pike (polyester) | Cotton Broad (cotton) | Cotton Satin (cotton) | Cotton Sheeting (cotton) |
| Image Quality Evaluation | 5 | 5 | 5 | 5 | 5 | 5 |
| Image Durability | 5 | 5 | 5 | 5 | 5 | 5 |

Ink C-16 was demonstrated to give excellent evaluation results on all of the tested textiles as is shown by Table 7.

### (Evaluation 2)

As are shown in Table 8, two ink sets each composed of Y, M, C, and Bk were prepared. Each set was loaded in each four ink-jet heads and color images were produced. The evaluation conditions were the same as Evaluation 1. Pigment Dispersion, Resin to be added, Solvent and Surfactant each shown in Table 8 were added as indicated in the figures of mass% in Table 8, then ion exchanged water was added so as to make a total amount to be 100 mass%.

DEGBE and DEGEE each respectively represent, diethylene glycol monobutyl ether, diethylene glycol monoethyl ether,

**Table 8**

| | Y | M | C | Bk | Y | M | C | Bk |
|---|---|---|---|---|---|---|---|---|
| Pigment Dispersion | P-2 | P-3 | P-1 | P-4 | P-2 | P-3 | P-1 | P-4 |
| | 7 | 7 | 7 | 7 | 7 | 7 | 7 | 7 |
| Ink-soluble Resin | R-1 | R-1 | R-1 | R-1 | R-5 | R-5 | R-5 | R-5 |
| | 3 | 3 | 3 | 4 | 3 | 3 | 3 | 3 |
| Solvent | DEGBE | DEGBE | DEGBE | DEGBE | DEGBE | DEGBE | DEGBE | DEGBE |
| | 12 | 10 | 27 | 25 | 12 | 12 | 12 | 12 |
| | DEGEE | DEGEE | - | DEGEE | - | - | - | - |
| | 10 | 12 | - | 12 | - | - | - | - |
| Surfactant | Si | Si | Si | Si | Si | Si | Si | Si |
| | 0.3 | 0.3 | 0.3 | 0.3 | 0.3 | 0.3 | 0.3 | 0.3 |
| Ion exchanged water | *1 | *1 | *1 | *1 | *1 | *1 | *1 | *1 |
| Remarks | Inv. | Inv. | Inv. | Inv. | Comp. | Comp. | Comp. | Comp. |

| | | | | | | | | |
|---|---|---|---|---|---|---|---|---|
| *1 : Residual amount Inv.: Present Invention Comp.: Comparatives Example | | | | | | | | |

The ink set composed of the inks of the present invention was revealed to produce a color image having no color bleeding, and even at the portion where an amount of an ink to make a secondary color is large, there appeared no repelling of the ink or an appearance of beading. The ink set of the present invention produced a good color image. On the other hand, the ink set composed of comparative inks was revealed to produce a color image having beading and color bleeding, therefore, the image quality was not satisfactory.

### (Evaluation 3)

By using Ink C-2 shown in Table 4, the effects of heating temperature of a medium were tested. The results are shown in Table 9.

**Table 9**

| Ink | | C-2 | C-2 | C-2 | C-2 | C-2 | C-2 | C-2 |
|---|---|---|---|---|---|---|---|---|
| Heating Temperature Of A Medium | | None (25°C) | 35 | 45 | 55 | 65 | 75 | 85 |
| Image Quality Evaluation | *1 | 1 | 3 | 4 | 5 | 4 | 4 | 3 |
| | Textile | 1 | 3 | 4 | 5 | 4 | 4 | 3 |
| Image Durability | *1 | 2 | 3 | 4 | 5 | 4 | 4 | 4 |
| | Textile | 2 | 3 | 4 | 5 | 4 | 4 | 4 |
| Ejection Stability | | 5 | 5 | 5 | 5 | 4 | 4 | 3 |
| Continuous Printing Property | | 5 | 5 | 5 | 5 | 4 | 3 | 3 |
| Recovery Property by Maintenance | | 5 | 5 | 5 | 5 | 4 | 3 | 3 |

| | | | | | | | | |
|---|---|---|---|---|---|---|---|---|
| *1 : Polyvinyl chloride sheet | | | | | | | | |

As are shown in Table 9, when the surface temperature of the recoding medium is 45 °C or 55 °C, the evaluation results were superior. It was shown that the surface temperature of the recoding medium is adequate in the range of 40 °C to 60 °C.

## Claims

1. A water-based ink-jet ink comprising: a pigment; an ink-soluble resin contained in an amount of from 2 mass% to 10 mass%; a water-soluble solvent selected from a glycol ether and a 1,2-alkanediol and contained in an amount of from 20 mass% to less than 45 mass%; and a surfactant of a silicon surfactant or a fluorochemical surfactant, wherein the ink-soluble resin contains a carboxyl group or a sulfo group as an acid group and has an acid value of from 80 to less than 300.

2. The water-based ink-jet ink described in claim 1, wherein a recording medium which is recorded by the ink is a textile.

3. The water-based ink-jet ink described in claim 1, wherein a recording medium which is recorded by the ink is non-water absorptive.

4. The water-based ink-jet ink described in claims 2 or 3, wherein a recording medium which is recorded by the ink is heated during recording.

5. A method for recording an image comprising a step of ejecting the water-based ink-jet ink of claim 1 on a recording medium.

6. The method for recording an image described in claim 5, wherein the recording medium is a textile.

7. The method for recording an image described in claim 6, wherein the recording medium is not subjected to a pretreatment for ink-jet printing before the water-based ink-jet ink is ejected.

8. The method for recording an image described in claims 6 or 7, wherein the recording medium is made of cotton, silk, wool or polyester.

9. The method for recording an image described in claim 5, wherein the recording medium is non-water absorptive.

10. The method for recording an image described in claim 9, wherein the non-water absorptive recording medium is one selected from the group consisting of a polymer sheet, a board, a glass, a tile, a rubber and a synthetic paper.

11. The method for recording an image described in any one of claims 5 to 10, wherein a recording medium recorded by the ink is heated during recording.

12. The method for recording an image described in claim 11, wherein the heating of the recording medium is done by using a contact heater at a side of the recording medium opposite a side on which of the ink is ejected.

13. The method for recording an image described in claims 11 or 12, wherein a temperature of a surface of the recording medium on which the ink is ejected is in the range of 40 °C, to 60 °C.

## Patentansprüche

1. Tintenstrahltinte auf Wasserbasis, umfassend: ein Pigment; ein tintenlösliches Harz, das in einer Menge von 2 Masse-% bis 10 Masse-% enthalten ist; ein wasserlösliches Lösemittel, das aus einem Glykolether und einem 1,2-Alkandiol ausgewählt ist und in einer Menge von 20 Masse-% bis weniger als 45 Masse-% enthalten ist; und ein grenzflächenaktives Mittel aus einem grenzflächenaktiven Mittel mit Silicium oder einem grenzflächenaktiven Mittel aus einer Fluorchemikalie, wobei das tintenlösliche Harz eine Carboxylgruppe oder eine Sulfogruppe als Säuregruppe enthält und einen Säurewert von 80 bis weniger als 300 aufweist.

2. Tintenstrahltinte auf Wasserbasis gemäß der Beschreibung in Anspruch 1, wobei ein Aufzeichnungsmedium, auf dem durch die Tinte eine Aufzeichnung erfolgt, ein Textilstoff ist.

3. Tintenstrahltinte auf Wasserbasis gemäß der Beschreibung in Anspruch 1, wobei ein Aufzeichnungsmedium, auf dem durch die Tinte eine Aufzeichnung erfolgt, nicht-wasserabsorbierend ist.

4. Tintenstrahltinte auf Wasserbasis gemäß der Beschreibung in den Ansprüchen 2 oder 3, wobei ein Aufzeichnungsmedium, auf dem durch die Tinte eine Aufzeichnung erfolgt, während der Aufzeichnung erhitzt wird.

5. Verfahren zur Aufzeichnung eines Bildes, das eine Stufe des Ausstoßens der Tintenstrahltinte auf Wasserbasis nach Anspruch 1 auf ein Aufzeichnungsmedium umfasst.

6. Verfahren zur Aufzeichnung eines Bildes gemäß der Beschreibung in Anspruch 5, wobei das Aufzeichnungsmedium ein Textilstoff ist.

7. Verfahren zur Aufzeichnung eines Bildes gemäß der Beschreibung in Anspruch 6, wobei das Aufzeichnungsmedium vor dem Ausstoßen der Tintenstrahltinte auf Wasserbasis keiner Vorbehandlung für Tintenstrahldruck unterzogen wird.

8. Verfahren zur Aufzeichnung eines Bildes gemäß der Beschreibung in den Ansprüchen 6 oder 7, wobei das Aufzeichnungsmedium aus Baumwolle, Seide, Wolle oder Polyester besteht.

9. Verfahren zur Aufzeichnung eines Bildes gemäß der Beschreibung in Anspruch 5, wobei das Aufzeichnungsmedium nicht-wasserabsorbierend ist.

10. Verfahren zur Aufzeichnung eines Bildes gemäß der Beschreibung in Anspruch 9, wobei das nichtwasserabsorbierende Aufzeichnungsmedium eines ist, das aus der Gruppe von einer Polymerlage, einer Platte, einem Glas, einer Kachel, einem Kautschuk und einem Kunstpapier ausgewählt ist.

11. Verfahren zur Aufzeichnung eines Bildes gemäß der Beschreibung in einem der Ansprüche 5 bis 10, wobei ein Aufzeichnungsmedium, auf dem durch die Tinte eine Aufzeichnung erfolgt, während der Aufzeichnung erhitzt wird.

12. Verfahren zur Aufzeichnung eines Bildes gemäß der Beschreibung in Anspruch 11, wobei das Erhitzen des Aufzeichnungsmediums durch Verwendung einer Kontaktheizvorrichtung auf einer Seite des Aufzeichnungsmediums, die entgegengesetzt zu der Seite, auf die die Tinte ausgestoßen wird, liegt, erfolgt.

13. Verfahren zur Aufzeichnung eines Bildes gemäß der Beschreibung in den Ansprüchen 11 oder 12, wobei die Temperatur einer Oberfläche des Aufzeichnungsmediums, auf die die Tinte ausgestoßen wird, im Bereich von 40 °C bis 60 °C liegt.

## Revendications

1. Encre pour jet d'encre à base d'eau comprenant : un pigment ; une résine soluble dans l'encre contenue dans une quantité de 2 % en masse à 10 % en masse ; un solvant soluble dans l'eau choisi parmi un éther de glycol et un 1,2-alcanediol et contenu dans une quantité de 20 % en masse à moins de 45 % en masse ; et un agent tensio-actif d'un agent tensio-actif siliconé ou d'un agent tensio-actif d'un composé chimique fluoré, dans laquelle la résine soluble dans l'eau contient un groupe carboxyle ou un groupe sulfo en tant que groupe acide et a un indice d'acide de 80 à moins de 300.

2. Encre pour jet d'encre à base d'eau selon la revendication 1, dans laquelle un support d'enregistrement qui est marqué par l'encre est un textile.

3. Encre pour jet d'encre à base d'eau selon la revendication 1, dans laquelle un support d'enregistrement qui est marqué par l'encre n'absorbe pas l'eau.

4. Encre pour jet d'encre à base d'eau selon la revendication 2 ou 3, dans laquelle un support d'enregistrement qui est marqué par l'encre est chauffé pendant l'enregistrement.

5. Procédé d'enregistrement d'une image comprenant une étape d'éjection de l'encre pour jet d'encre à base d'eau selon la revendication 1 sur un support d'enregistrement.

6. Procédé d'enregistrement d'une image selon la revendication 5, dans lequel le support d'enregistrement est un textile.

7. Procédé d'enregistrement d'une image selon la revendication 6, dans lequel le support d'enregistrement n'est pas soumis à un prétraitement pour l'impression par jet d'encre avant l'éjection de l'encre pour jet d'encre à base d'eau.

8. Procédé d'enregistrement d'une image selon la revendication 6 ou 7, dans lequel le support d'enregistrement est en coton, soie, laine ou poly(ester).

9. Procédé d'enregistrement d'une image selon la revendication 5, dans lequel le support d'enregistrement n'absorbe pas l'eau.

10. Procédé d'enregistrement d'une image selon la revendication 9, dans lequel le support d'enregistrement qui n'absorbe pas l'eau est choisi dans le groupe consistant en une feuille de polymère, un carton, un verre, une tuile, un caoutchouc et un papier synthétique.

11. Procédé d'enregistrement d'une image selon l'une quelconque des revendications 5 à 10, dans lequel un support d'enregistrement marqué par l'encre est chauffé pendant l'enregistrement.

12. Procédé d'enregistrement d'une image selon la revendication 11, dans lequel le chauffage du support d'enregistrement est réalisé en utilisant un appareil de chauffage par contact au niveau d'un côté du support d'enregistrement opposé à un côté sur lequel l'encre est éjectée.

13. Procédé d'enregistrement d'une image selon la revendication 11 ou 12, dans lequel une température d'une surface du support d'enregistrement sur lequel l'encre est éjectée est dans la plage de 40 C à 60°C.
